# EUROPEAN PATENT APPLICATION

(11) **EP 3 978 315 A2**
(43) Date of publication of application: **06.04.2022**
(21) Application number: 21189803.6
(22) Date of filing: 05.08.2021
(51) Int. Cl.: B60R 9/10

(54) **BIKE CARRIER ASSEMBLY**

(30) Priority: 30.09.2020 TW 109212949 U
(71) Applicant: King Rack Industrial Co., Ltd., Taichung City (TW)
(72) Inventor: Wang, Chiu-Kuei, Taichung City (TW); Espesset, Hugues, Taichung City (TW); Girod, Frederic, Taichung City (TW)
(74) Representative: Cabinet Chaillot

(57) **Abstract**

A bike carrier assembly includes a connection unit that has a connector to be connected to a vehicle, and an adaptor that is connected to the connection unit and includes multiple first holes. A bike carrier and a shelf are selectively connected to the adaptor. The bike carrier includes multiple second holes, and the shelf includes multiple third holes. Multiple locking members extend through the second holes or the third holes and the first holes to connect the bike carrier or the shelf to the adapter. An extension is selectively connected to the adaptor so as to be connected with another bike carrier or another shelf.

## Description

### BACKGROUND OF THE INVENTION

### 1. Fields of the invention

The present invention relates to a bike carrier assembly, and more particularly, to a bike carrier assembly for selectively connected with a bike carrier and/or a shelf.

### 2. Descriptions of Related Art

The conventional bike carriers are usually designed to carry bikes behind a vehicle, and the bike carriers are able to carry multiple bikes. When the users have luggage that the interior space of the vehicle is not sufficient for loading the luggage, top racks are developed and installed to the top of the vehicle. Nevertheless, it is not so convenient for some users because the luggage on the top of the vehicle is not easily accessed. Some of the top racks are designed to carry bicycles only and cannot be used to carry extra luggage.

The present invention intends to provide a bike carrier assembly which can be selectively connected with a bike carrier and/or a shelf to carry more bikes and more luggage.

### SUMMARY OF THE INVENTION

The present invention relates to a bike carrier assembly and comprises a connection unit, at least one bike carrier and at least one shelf. The at least one bike carrier or the at least one shelf is connected to the connection unit. The connection unit has a connector which is connected to a vehicle, and an adaptor is connected to the connection unit and includes multiple first holes. The at least one bike carrier or the at least one shelf is connected to the adaptor. The bike carrier includes multiple second holes, and the at least one shelf includes multiple third holes. Multiple locking members extend through the second holes or the third holes and the first holes to connect the at least one bike carrier or the at least one shelf to the adapter.

The present invention also provides to a bike carrier assembly which comprises a connection unit, at least one bike carrier or at least one shelf. The connection unit is connected to a vehicle. The at least one bike carrier and the at least one shelf are connected to the connection unit. The connection unit has a connector which is connected to the vehicle. An adaptor is connected to the connection unit and includes multiple first holes. An extension is removably connected to the adaptor. The extension includes multiple bores. The bike carrier includes multiple second holes. The at least one shelf includes multiple third holes. Multiple locking members extend through the second holes or the third holes and the first holes and the bores to connect the at least one bike carrier or the at least one shelf to the connection unit.

Preferably, the adaptor is a U-shaped tube and a bar is connected between two ends of the U-shaped tube.

Preferably, the adaptor is a U-shaped tube and a bar is connected between two ends of the U-shaped tube. The bar includes an I-shaped cross section to reinforce the strength of the adaptor. The bar includes two caps.

Preferably, the adaptor is a U-shaped tube which includes two open ends. An extension is connected to the two open ends.

Preferably, the extension includes multiple bores which are located corresponding to the second holes of the adapter, the first holes of the at least one bike carrier or the third holes of the at least one shelf. The multiple locking members extend through the first holes or the third holes and the bores to connect the at least one bike carrier or the at least one shelf to the adaptor and the extension.

Preferably, the extension includes a light unit which is electrically connected to a cable of the vehicle.

Preferably, the light unit includes a taillight, a turning light and a brake light.

The primary object of the present invention is to provide a bike carrier assembly wherein a bike carrier or a shelf can be selectively connected to the bike carrier assembly when needed. Besides, an extension is selectively connected to the adaptor so as to allow more sets of the bike carrier and/or the shelf to be used.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view of the first embodiment of the bike carrier assembly of the present invention;
Fig. 2 is a perspective view to show the first embodiment of the bike carrier assembly of the present invention;
Fig. 3 shows that a shelf is to be connected to the adaptor of the bike carrier assembly of the present invention;
Fig. 4 is a perspective view to show that the shelf is connected to the adaptor of the bike carrier assembly of the present invention;
Fig. 5 is an exploded view to show the second embodiment of the bike carrier assembly of the present invention;
Fig. 6 is a perspective view to show the second embodiment of the bike carrier assembly of the present invention;
Fig. 7 is an exploded view to show the third embodiment of the bike carrier assembly of the present invention;
Fig. 8 is a perspective view to show the third embodiment of the bike carrier assembly of the present invention;
Fig. 9 is an exploded view to show the fourth embodiment of the bike carrier assembly of the present invention, and
Fig. 10 is a perspective view to show the fourth embodiment of the bike carrier assembly of the present invention.

### DETAILED DESCRIPTION OF THE PREFERRED EMBODIMENT

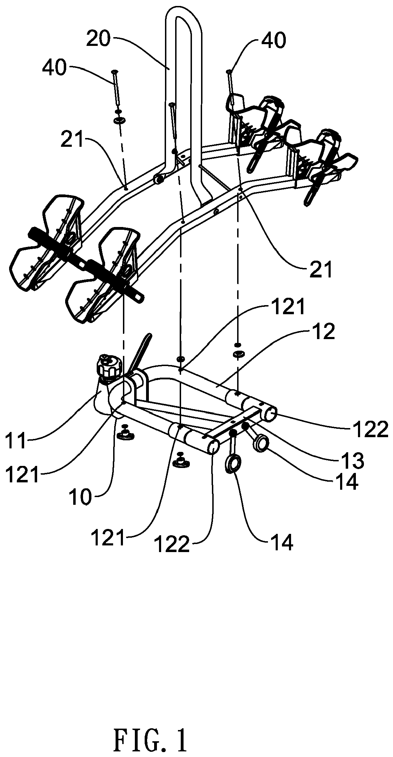

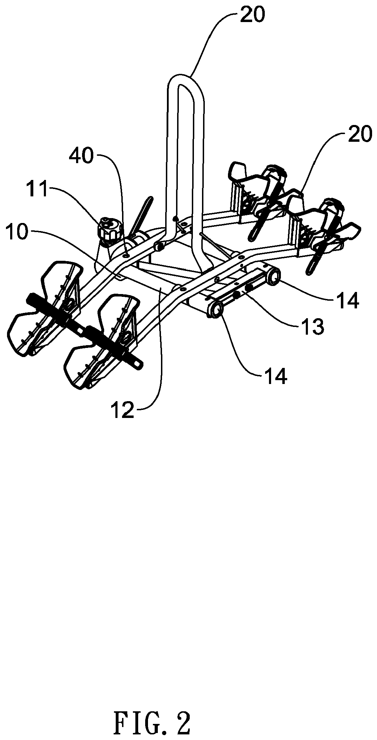

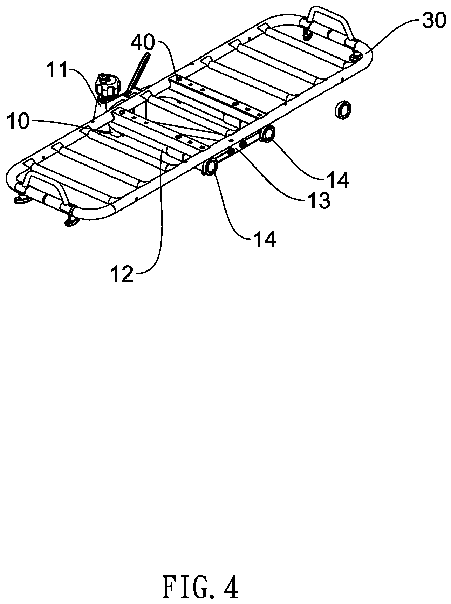

Referring to Figs. 1 to 4, the first embodiment of the bike carrier assembly of the present invention comprises a connection unit 10, a bike carrier 20 or a shelf 30.

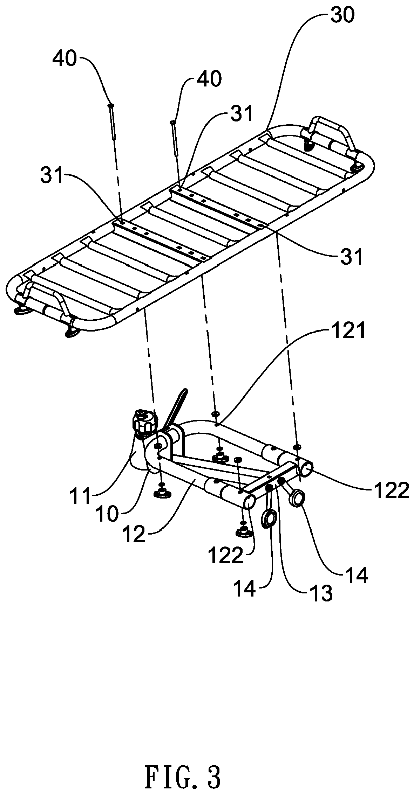

The connection unit 10 has a connector 11 which is connected to a vehicle (not shown), and an adaptor 12 is connected to the connection unit 10. The bike carrier 20 or the shelf 30 is selectively connected to the adaptor 12. The bike carrier 20 includes at least one U-shaped part so as to position a bike (not shown). As shown in Figs. 1 and 3, the adaptor 12 is a U-shaped tube which includes two open ends 122. Multiple first holes 121 are defied in the adaptor 12. A bar 13 is connected between two ends of the U-shaped tube so as to reinforce the strength of the adaptor 12. In order to prevent water from entering the adaptor 12 via the two open ends 122 to cause rusting, the bar 13 includes two caps 14 which are engaged with and seal the two open ends 122.

The bike carrier 20 includes multiple second holes 21. The shelf 30 includes multiple third holes 31. Multiple locking members 40 extend through the second holes 21 or the third holes 31 and the first holes 121 to connect the bike carrier 20 or the shelf 30 to the adapter 12.

Therefore, the users may selectively install the bike carrier 20 or the shelf 30 to the adapter 12 according to practical needs.

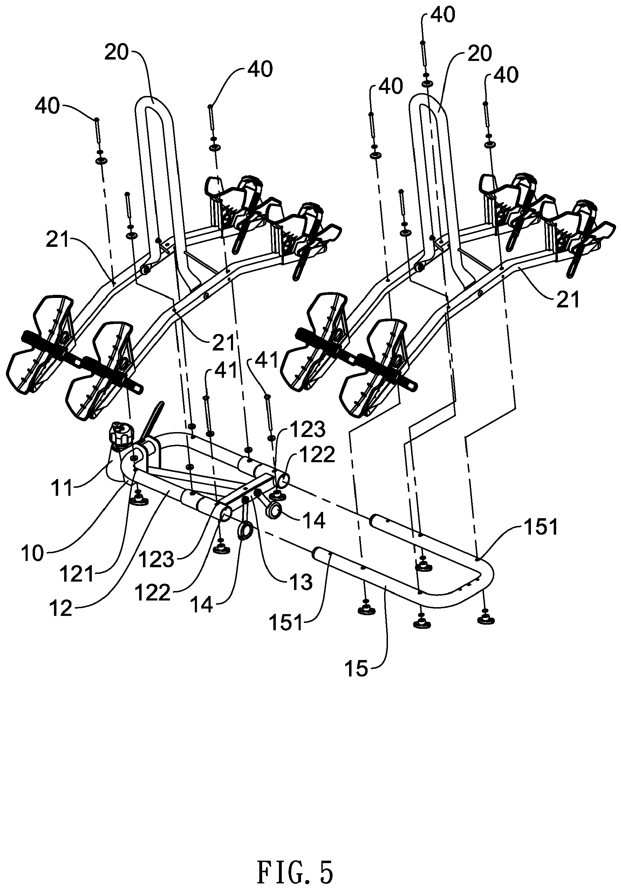

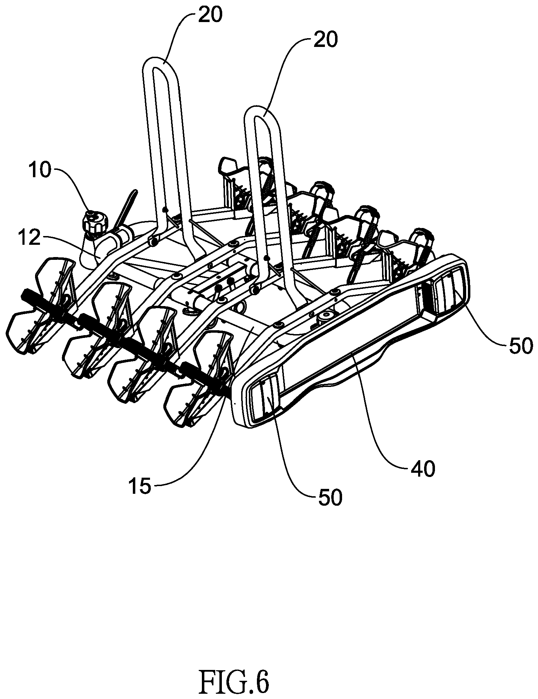

Figs. 5 and 6 show the second embodiment of the present invention, the difference from the first embodiment is that an extension 15 is connected to the two open ends 122 of the adaptor 12. The extension 15 includes multiple bores 151 which are located corresponding to the first holes 121 of the adapter 12. The locking members 40 extend through bores 151 of the extension 15 and the first holes 121 of the adapter 12 to connect the extension 15 to the adaptor 12. Another bike carrier 20 can be connected to the extension 15 when needed.

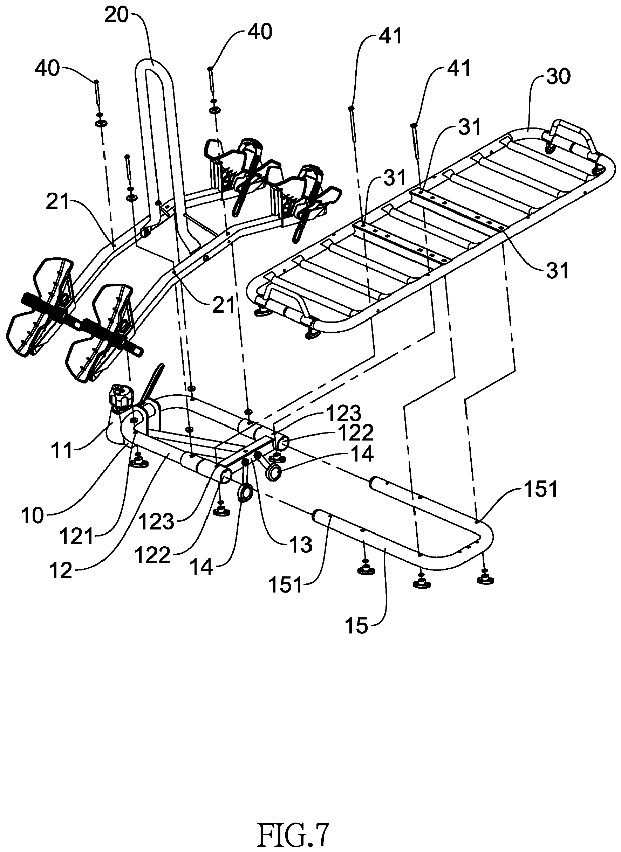

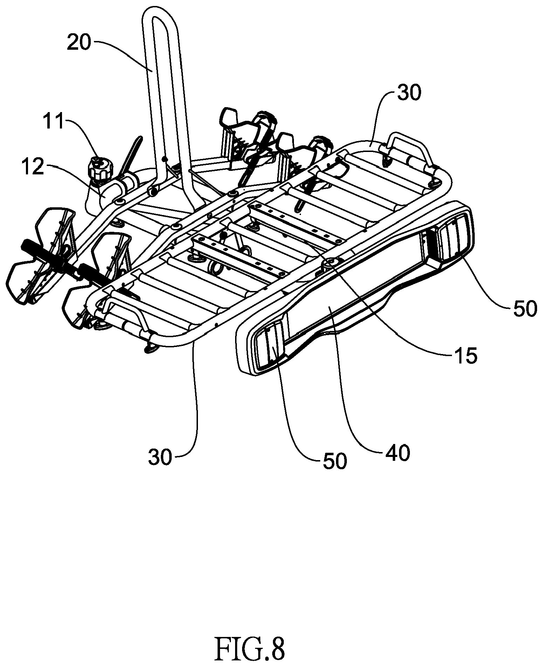

Figs. 7 and 8 show the third embodiment of the present invention, wherein the difference between the second and third embodiments is that the third embodiment includes a connection unit 10, a bike carrier 20 and a shelf 30. The multiple bores 151 of the extension 15 are located corresponding to the third holes 31 of the shelf 30 and the first holes 121 of the adapter 12. The locking members 40 extend through the second holes 21 of the bike carrier 20, the third holes 31 of the shelf 30, the first holes 121 of the adapter 12 and the bores 151 of the extension 15 to connect the bike carrier 20, the shelf 30, the adaptor 12 and the extension 15 together. Specifically, the bike carrier 20 is connected to the adaptor 12, and the shelf 30 is connected to the extension 15. Therefore, the bike carrier 20 and the shelf 30 are both connected to the connection unit 10.

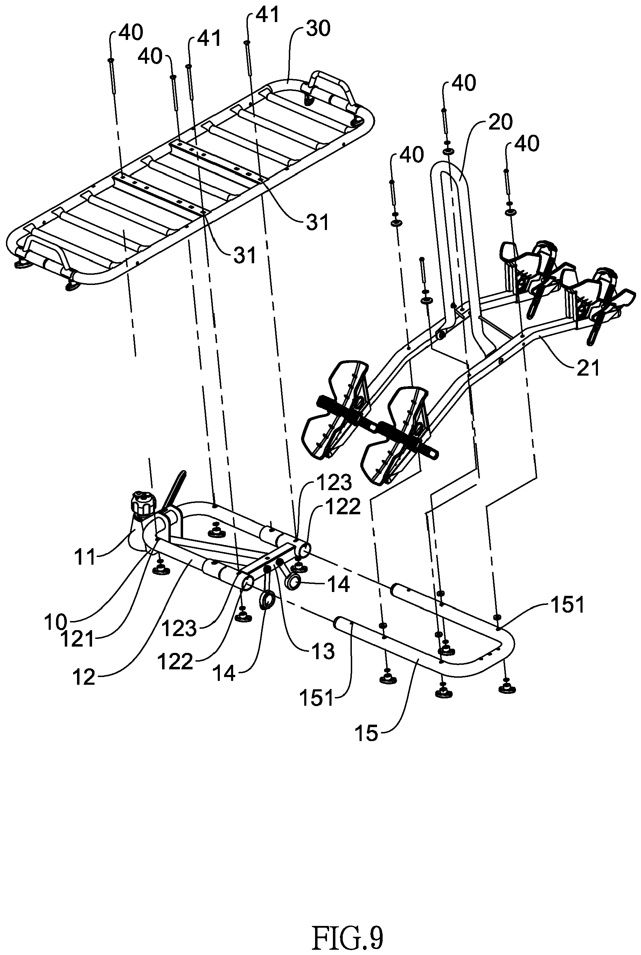

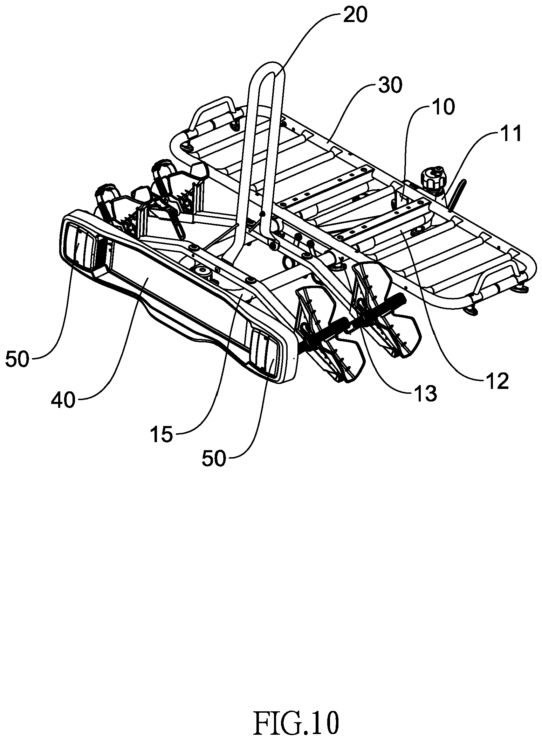

Figs. 9 and 10 show the fourth embodiment of the present invention wherein the difference between the third and fourth embodiments is that the bike carrier 20 and the shelf 30 switch their position, so that the shelf 30 of the fourth embodiment is located close to the rear end of the vehicle.

When multiple bikes to be carried, then two bike carriers 20 can be respectively connected to the extension 15 and the adaptor 12 to carry the two bikes. Of course, the extension 15 and the adaptor 12 each can be connected with a shelf 30.

For safety reason, the extension 15 includes a light unit 50 which is electrically connected to a cable (not shown) of the vehicle. The light unit 50 includes a taillight, a turning light and a brake light.

While we have shown and described the embodiment in accordance with the present invention, it should be clear to those skilled in the art that further embodiments may be made without departing from the scope of the present invention.

## Claims

1. A bike carrier assembly comprising:
a connection unit (10), at least one bike carrier (20) and at least one shelf (30), the at least one bike carrier (20) or the at least one shelf (30) connected to the connection unit (10), wherein the connection unit (10) has a connector (11) which is adapted to be connected to a vehicle, an adaptor (12) is connected to the connection unit (10) and includes multiple first holes (121), the at least one bike carrier (20) or the at least one shelf (30) is connected to the adaptor (12), the bike carrier (20) includes multiple second holes (21), the at least one shelf (30) includes multiple third holes (31), multiple locking members (40) extend through the second holes (21) or the third holes (31) and the first holes (121) to connect the at least one bike carrier (20) or the at least one shelf (30) to the adapter (12).

2. The bike carrier assembly as claimed in claim 1, wherein the adaptor (12) is a U-shaped tube and a bar (13) is connected between two ends of the U-shaped tube.

3. The bike carrier assembly as claimed in claim 1, wherein the adaptor (12) is a U-shaped tube and a bar (13) is connected between two ends of the U-shaped tube, the bar (13) includes two caps (14).

4. The bike carrier assembly as claimed in claim 1, wherein the adaptor (12) is a U-shaped tube which includes two open ends (122), an extension (15) is connected to the two open ends (122).

5. The bike carrier assembly as claimed in claim 4, wherein the extension (15) includes multiple bores (151) which are located corresponding to the first holes (121) of the adapter (12), the second holes (21) of the at least one bike carrier (20) or the third holes (31) of the at least one shelf (30), the multiple locking members (40) extend through the second holes (21) or the third holes (31) and the first holes (121) of the adaptor (12) and the bores (151) to connect the at least one bike carrier (20) or the at least one shelf (30) to the adaptor (12) and the extension (15).

6. The bike carrier assembly as claimed in claim 4, wherein the extension (15) includes a light unit (50) which is adapted to be electrically connected to a cable of the vehicle.

7. The bike carrier assembly as claimed in claim 6, wherein the light unit (50) includes a taillight, a turning light and a brake light.

8. A bike carrier assembly comprising:
a connection unit (10), at least one bike carrier (20) or at least one shelf (30), the connection unit (10) adapted to be connected to a vehicle, the at least one bike carrier (20) and the at least one shelf (30) connected to the connection unit (10), wherein the connection unit (10) has a connector (11) which is adapted to be connected to the vehicle, an adaptor (12) is connected to the connection unit (10) and includes multiple first holes (121), an extension (15) is removably connected to the adaptor (12), the extension (15) includes multiple bores (151), the at least one bike carrier (20) includes multiple second holes (21), the at least one shelf (30) includes multiple third holes (31), multiple locking members (40) extend through the second holes (21) or the third holes (31) and the first holes (121) and the bores (151) to connect the at least one bike carrier (20) or the at least one shelf (30) to the connection unit (10).

9. The bike carrier assembly as claimed in claim 8, wherein the adaptor (12) is a U-shaped tube and a bar (13) is connected between two ends of the U-shaped tube.

10. The bike carrier assembly as claimed in claim 8, wherein the adaptor (12) is a U-shaped tube and a bar (13) is connected between two end of the U-shaped tube, the bar (13) includes two caps (14).

11. The bike carrier assembly as claimed in claim 8, wherein the adaptor (12) is a U-shaped tube which includes two open ends (122).

12. The bike carrier assembly as claimed in claim 8, wherein the extension (15) includes a light unit (50) which is adapted to be electrically connected to a cable of the vehicle.

13. The bike carrier assembly as claimed in claim 12, wherein the light unit (50) includes a taillight, a turning light and a brake light.
